# NEUE EUROPÄISCHE PATENTSCHRIFT

(11) **EP 3 538 345 B2**
(45) Veröffentlichungstag und Bekanntmachung des Hinweises auf die Entscheidung über den Einspruch: **27.12.2023**
(45) Hinweis auf die Patenterteilung: 17.02.2021
(21) Anmeldenummer: 17840424.0
(22) Anmeldetag: 09.11.2017
(51) Int. Cl.: B29C 59/04, B29C 59/02, B65D 63/10, B65B 13/00, B29L 31/00, B29K 23/00, B29K 67/00

(54) **KUNSTSTOFFUMREIFUNGSBAND UND VERFAHREN ZUR HERSTELLUNG EINES KUNSTSTOFFUMREIFUNGSBANDES**
PLASTIC STRAP AND METHOD FOR PRODUCING A PLASTIC STRAP
BANDE DE CERCLAGE EN MATIÈRE PLASTIQUE ET PROCÉDÉ DE FABRICATION D'UNE BANDE DE CERCLAGE EN MATIÈRE PLASTIQUE

(30) Priorität: 11.11.2016 DE 102016121651
(43) Veröffentlichungstag der Anmeldung: 18.09.2019
(73) Patentinhaber: Teufelberger Gesellschaft m.b.H., 4600 Wels (AT)
(72) Erfinder: GAHLEITNER, Thomas, 4631 Krenglbach (AT)
(74) Vertreter: Burger, Hannes
(86) Internationale Anmeldenummer: PCT/AT2017/060300
(87) Internationale Veröffentlichungsnummer: WO 2018/085874

(56) Entgegenhaltungen:
- EP-A1- 1 657 178
- EP-A1- 1 657 178
- WO-A1-2015/042631
- JP-U- S5 755 759
- US-A- 4 062 918
- US-A1- 2007 014 971

## Beschreibung

Die Erfindung betrifft ein Verfahren zur Herstellung eines Kunststoffumreifungsbandes.

In der Verpackungsbranche werden zunehmend Kunststoffumreifungsbänder anstatt der früher meist verwendeten Metall- bzw. Stahlbänder eingesetzt. Diese Kunststoffumreifungsbänder bestehen üblicherweise hauptsächlich aus einem teilkristallinen, thermoplastischen Kunststoffmaterial, welches im Herstellungsprozess monoaxial bzw. zumindest vorwiegend monoaxial verstreckt wird. Während dieses Verstreckungsvorgangs werden die Makromolekülketten vorwiegend entlang der jeweiligen Hauptverstreckungsrichtung orientiert. Die Hauptverstreckungsrichtung entspricht hierbei zumeist wenigstens vorwiegend einer Längserstreckungsrichtung der finalen Kunststoffumreifungsbänder.

Durch diese Vorzugsorientierung der Makromolekülketten des Kunststoffmaterials weisen die Kunststoffumreifungsbänder hohe Zugfestigkeiten bzw. Reissfestigkeiten auf, welche den Zugfestigkeiten von Metallbändern zumindest ähnlich sind. Insbesondere bei hochverstreckten Kunststoffmaterialien kann die Zugfestigkeit jene eines Metallbandes durchaus sogar übertreffen. Andererseits weisen verstreckte Kunststoffumreifungsbänder durch diese Vorzugsorientierung der Makromoleküle auch eine erhöhte Neigung zu einer Auftrennung bzw. Auffaserung entlang der Längserstreckung bzw. entlang der Hauptverstreckungsrichtung auf, was sowohl während der Herstellung als auch beim späteren Gebrauch zu berücksichtigen ist.

Ein Umreifungsvorgang erfordert zunächst ein Umschlingen des oder der zu umreifenden bzw. zu bündelnden Güter. anschließend werden die Umreifungsbänder gespannt und die beiden Längsenden der Umeifungsbänder miteinander verbunden. Bei Kunststoffumreifungsbändem können die beiden Längsenden bzw. Bandenden vorteilhafterweise miteinander verschweißt werden. Beim sogenannten Heizkeilverschluss werden die beiden zu verbindenden Längsenden mittels eines Heizkeils, beispielsweise einer Metallzunge oberflächlich erhitzt bzw. angeschmolzen, und anschließend zum Materialschluss aneinandergepresst. Die am häufigsten angewandte Methode ist das sogenannte Reibschweißen. Hierbei werden die beiden Längsenden aufeinandergepresst, und alternierend gegeneinander bewegt. Durch die hierbei freiwerdende Reibungswärme erweichen die Längsenden, und werden durch den aufgebrachten Druck miteinander verschweißt.

In der modernen Praxis bei der Verpackung und Sicherung von Gütern werden Umreifungsvorgänge häufig teil- oder sogar vollautomatisiert mittels Umreifungsgeräten durchgeführt. Im Einsatz sind sowohl Handgeräte als auch Vollautomaten. In beiden Fällen müssen die Umreifungsbänder mittels jeweils hierfür vorgesehener Werkzeuge, zum Beispiel Führ- und/oder Spann- und/oder Schweißwerkzeuge handhabbar sein. Glatte Oberflächen sind hierbei oftmals problematisch, da es hierbei zu einem Durchrutschen zwischen Umreifungsband und Werkzeug, insbesondere beim Spannen und Verschweißen kommen kann.

Zum Zweck besserer Führ-, Spann-, und Verschweißbarkeit bei maschinell unterstützten oder vollautomatisch ausgeführten Umreifungsvorgängen, können Kunststoffumreifungsbänder mit Prägungen versehen werden. Derartige Prägungen können bewirken, dass die entsprechenden Kunststoffumreifungsbänder besser maschinell handhabbar und verschweißbar sind.

Solche Prägungen können mechanisch in eine Oberfläche eines Bandes eingebracht bzw. auf eine Bandoberfläche aufgebracht werden. Häufig werden Prägewalzen, also Walzen aufweisend eine strukturierte Prägeoberfläche eingesetzt. Eine derartige Oberflächenbearbeitung im Zuge der Herstellung birgt allerdings immer ein gewisses Risiko einer Beschädigung eines Umreifungsbandes selbst. Wie bereits erwähnt zeigen solche monoaxial verstreckten Umreifungsbänder insbesondere eine hohe Neigung zu einer Auftrennung bzw. Auffaserung entlang der Längserstreckung, häufig auch als Aufspleissen bezeichnet.

Des Weiteren kann eine mechanische Oberflächenbearbeitung zum Einbringen einer Prägung in ein Kunststoffumreifungsband die Eigenschaften des Bandes negativ beeinflussen. Durch eine Prägung werden im Besonderen durch Materialverdrängung Vertiefungen in das Kunststoffmaterial eingebracht, sodass eine Banddicke im Bereich dieser Vertiefungen stark reduziert wird. Dies wiederum kann sich beispielsweise negativ auf die für die Bildung von sicheren Umreifungen so wichtige Zugfestigkeit bzw. Reissfestigkeit der Umreifungsbänder auswirken.

Aus diesen Gründen wurden in der Vergangenheit solche Oberflächenbearbeitungen nur beschränkt durchgeführt. Im Besonderen wurde das Ausmaß in eine Oberfläche eines Umreifungsbandes eingebrachten Vertiefungen beschränkt, um die mechanischen Eigenschaften, insbesondere die Zugfestigkeit nicht zu verschlechtern.

Aus der WO 2015/042631 A1 ist ein Verfahren zur Herstellung eines Umreifungsbandes bzw. ein dementsprechendes Umreifungsband bekannt. Das hierin offenbarte Verfahren umfasst die Bereitstellung eines teilkristallinen, thermoplastischen Kunststoffmaterials, dessen Aufschmelzen und Extrusion zu einem Kunststoffstrang, sowie zumindest überwiegend monoaxiales Verstrecken des Kunststoffstranges. Zumindest eine Oberfläche des verstreckten Kunststoffstranges wird mittels einer Prägewalze mit einer Prägung versehen. In der WO 2015/042631 A1 ist jedoch keine weiterführende Lehre betreffend Ausgestaltung der angegeben Prägung im Hinblick auf Optimierung der mechanischen Eigenschaften und Verarbeitbarkeit bei maschineller Umreifung offenbart.

EP1657178A1 offenbart ein Verfahren gemäß dem Oberbegriff desAnspruchs 1.

Es besteht somit weiterhin Bedarf, Verfahren zur mechanischen Oberflächenbehandlung bzw. Prägung von Kunststoffumreifungsbändern zu optimieren, und Kunststoffumreifungsbänder mit verbesserten Eigenschaften bereitzustellen, welche im Speziellen hinsichtlich einer Umreifung von Gütern, möglichst gute mechanische Eigenschaften aufweisen, und gleichzeitig eine möglichst effiziente und fehlerfreie, maschinelle Verarbeitbarkeit zur Bildung von Umreifungen zeigen.

Aufgabe der vorliegenden Erfindung war es, ein verbessertes Verfahren zur Herstellung von Kunststoffumreifungsbändern zur Verfügung zu stellen, mittels welchem Umreifungsvorgänge möglichst effizientausgeführt werden können, und eine stabile und sichere Umreifung von Gütern ermöglicht ist.

Diese Aufgabe wird durch ein Verfahren zur Herstellung eines Kunststoffumreifungsbandes gemäß den Ansprüchen gelöst.

Das Verfahren zur Herstellung von Kunststoffumreifungsbändern umfasst die Bereitstellung eines teilkristallinen, thermoplastischen Kunststoffmaterials, und das Aufschmelzen des Kunststoffmaterials. Des Weiteren wird das aufgeschmolzene Kunststoffmaterial mittels einer Extrusionsvorrichtung zu wenigstens einem Kunststoffstrang extrudiert. Hiernach wird der extrudierte Kunststoffstrang abgekühlt, insbesondere mittels einer Abkühlvorrichtung abgekühlt. Anschließend erfolgt ein monoaxiales oder überwiegend monoaxiales Verstrecken des Kunststoffstranges zu einem verstreckten Strang mittels zumindest eines Reckwerks. Dieser verstreckte Strang weist zwei durch eine Dicke des verstreckten Stranges voneinander beabstandete Oberflächen auf.

Zumindest eine Oberfläche des verstreckten Stranges wird mittels einer Prägevorrichtung, aufweisend wenigstens eine Prägewalze, mit einer Prägung, insbesondere mit einer durchgängigen Prägung versehen. Die wenigstens eine Prägewalze umfasst an ihrer Walzenoberfläche Fortsätze zum Erzeugen von Vertiefungen auf der zumindest einen Oberfläche des verstreckten Stranges.

Wesentlich ist, dass als die wenigstens eine Prägewalze eine Prägewalze eingesetzt wird, deren Fortsätze ebene oder vorwiegend ebene Plateauflächen zur Erzeugung von ebenen oder überwiegend ebenen Basisflächen bzw. Grundflächen der Vertiefungen auf der zumindest einen Oberfläche des verstreckten Stranges, aufweisen. Hierbei werden die Plateauflächen der Fortsätze derart dimensioniert, und werden die Fortsätze derart voneinander beabstandet an der Walzenoberfläche angeordnet, dass zwischen 44 % und 55 % einer jeweils gesamten, in senkrechter Draufsicht betrachteten Parallelprojektion der jeweils zumindest einen geprägten Bandoberfläche der finalen Kunststoffumreifungsbänder durch die Summe der Basisflächen der Vertiefungen gebildet wird.

Im Zuge des Prägevorgangs bewirkt das Einbringen der Vertiefungen eine Materialverteilung, sodass zwischen den Vertiefungen bzw. zwischen den Basisflächen stegartige Erhöhungen bzw. Erhebungen gebildet werden. Eine Banddicke des Kunststoffumreifungsbandes wird somit durch das Prägen bzw. im Zuge des Prägevorgangs im Bereich der Vertiefungen erniedrigt und im Bereich der Erhöhungen zumindest abschnittsweise erhöht. Die Plateauflächen der Fortsätze können zum Beispiel Abmessungen bzw. Ausdehnungen im dreistelligen Mikrometer- bis einstelligen Millimeterbereich aufweisen. Im Prinzip kann eine geometrische Form der Plateauflächen beliebig gewählt sein. Bestimmte geometrische Ausgestaltungsformen können jedoch zusätzlich Vorteile bringen, wie noch erläutert wird. Eine jeweilige geometrische Form einer Plateaufläche wird im Zuge des Prägevorgangs jeweils wenigstens vorwiegend auf die bzw. in die Oberfläche des verstreckten Stranges übertragen, sodass die Basisflächen der Vertiefungen zumindest im Wesentlichen dieselbe geometrische Form aufweisen, wie die Plateauflächen der Fortsätze.

Durch das Verfahren können Kunststoffumreifungsbänder bereitgestellt werden, welche gute mechanische Eigenschaften, insbesondere hohe Zugfestigkeiten aufweisen. Außerdem sind die hergestellten Kunststoffumreifungsbänder hervorragend maschinell zu Umreifungen verarbeitbar. Im Besonderen können die Kunststoffumreifungsbänder sehr gut maschinell bzw. teil- oder vollautomatisch geführt, gespannt und verschweisst werden. Durch die angegebenen Maßnahmen können die Kunststoffumreifungsbänder ohne ein erhöhtes Risiko für Beschädigungen während oder nach der Produktion hergestellt werden.

Überraschenderweise hat sich hierbei herausgestellt, dass das verhältnismäßig große Flächenausmaß an eingebrachten Vertiefungen sich nicht signifikant auf die mechanischen Eigenschaften der Kunststoffumreifungsbänder auswirkt. Dies kann mit den im Zuge der Prägung bzw. des Prägevorgangs zwischen den eingebrachten Vertiefungen erzeugten Erhöhungen in Zusammenhang stehen. So können Kunststoffumreifungsbänder mit hoher Zugfestigkeit hergestellt werden, bei welchen das Risiko eines Einreissen während der Bildung einer Umreifung, oder nachher, trotz des bezogen auf die gesamte Fläche hohen Prozentsatzes an Basisflächen der Vertiefungen, möglichst minimiert ist.

Vorteilhaft ist außerdem, dass Kunststoffumreifungsbänder mit verhältnismäßig geringem Flächengewicht bzw. verhältnismäßig geringem Metergewicht hergestellt werden können, welche dennoch hervorragende Eigenschaften, insbesondere hohe Zugfestigkeiten aufweisen. Die verringerte Banddicke im Bereich der Vertiefungen scheint hierbei zumindest weitestgehend durch die zwischen den Vertiefungen ausgebildeten Erhöhungen ausgeglichen werden zu können. Hinsichtlich einer maschinellen Verarbeitung zur Bildung einer Umreifung ist von zusätzlich von besonderem Vorteil, dass eine Steifigkeit durch die angegebenen Maßnahmen bzw. aufgrund der erhöhten Banddicke im Bereich der stegförmigen Erhöhungen, sogar noch weiter gesteigert werden kann.

Als thermoplastisches Kunststoffmaterial können im Prinzip alle verstreck- bzw. reckbaren, teilkristallinen Kunststoffmaterialien oder Mischungen bzw. Blends dieser Kunststoffmaterialien bereitgestellt werden. Ein thermoplastisches Kunststoffmaterial im Sinne dieser Beschreibung ist ein schmelzbarer bzw. schweißbarer, polymerer organischer Festkörper, welcher synthetisch oder halbsynthetisch aus monomeren, organischen Molekülen und/oder Biopolymeren hergestellt werden kann. Ein teilkristallines, thermoplastisches Kunststoffmaterial kann beispielsweise aus der Gruppe der Polyolefine, Polyester oder Polyamide, oder Mischungen dieser Polymere ausgewählt werden. Im Speziellen kann ein Kunststoffmaterial aus der Gruppe der Polyolefine oder Polyester, oder Mischungen hiervon bereitgestellt werden. Dem bereitgestellten Kunststoffmaterial können außerdem noch Füllstoffe bzw. Additive beigemengt werden.

Bei einer Weiterbildung kann vorgesehen sein, dass als die wenigstens eine Prägewalze eine Prägewalze eingesetzt wird, deren Plateauflächen der Fortsätze derart dimensioniert werden, und deren Fortsätze derart voneinander beabstandet an der Walzenoberfläche angeordnet werden, dass zwischen 45 % und 52 % der jeweils gesamten, in senkrechter Draufsicht betrachteten Parallelprojektion der jeweils zumindest einen geprägten Bandoberfläche der Kunststoffumreifungsbänder durch die Summe der Basisflächen der Vertiefungen gebildet wird..

Durch Einbringen einer Prägung mit dem angegebenen Prozentbereich für die Summe der Basisflächen, können Kunststoffumreifungsbänder hergestellt werden, welche sich besonders gut zur teil- oder vollautomatischen, maschinellen Bildung von Umreifungen eignen.

Es ist vorgesehen, dass als die wenigstens eine Prägewalze eine Prägewalze mit Fortsätzen eingesetzt wird, deren Plateauflächen durch geschlossene, ovale Kurven umgrenzt bzw. begrenzt sind.

Auf diese Weise können Kunststoffumreifungsbänder hergestellt werden, welche im Besonderen hinsichtlich eines maschinellen Spannens und Verschweißens durch Reibschweißen nochmalig weiter verbessert sind. Dies vor allem deshalb, da bei der Bildung einer Umreifung eine möglichst gleichmäßige Kraftübertragung von einer Spann- bzw. Verschlussvorrichtung auf die Kunststoffumreifungsbänder erfolgen kann. Im Zuge des Verschweißvorganges kann außerdem ein schnelleres Erweichen des thermoplastischen Kunststoffmaterials erzielt werden, wodurch die zur Bildung einer Umreifung erforderliche Zeitspanne verkürzt werden kann. Im Gegensatz zu abschnittsweise geraden Umgrenzungslinien können durch Plateauflächen mit geschlossenen, ovalen Umgrenzungslinien Vertiefungen in den Kunststoffumreifungsbändern eingebracht werden, bei welchen die Tendenz zu einem nachteiligen, gegenseitigen Verhaken der beiden Längsenden eines Umreifungsbandes weiter minimiert werden kann.

Es ist auch vorgesehen, dass die wenigstens eine Prägewalze relativ zu der, der Prägewalze zugewandten Oberfläche des verstreckten Stranges derart positioniert wird, dass die Plateauflächen der Fortsätze im Zuge der Prägung in eine Eindringtiefe zwischen 2 % und 48 % bezogen auf die Dicke des verstreckten Stranges vor dem Prägen, in den verstreckten Strang eindringen.

Auf diese Weise können einerseits Beschädigungen während der Herstellung und bei der Benutzung der Kunststoffumreifungsbänder wirksam hintangehalten werden. Trotzdem können Vertiefungen mit ausreichender Tiefe erzeugt werden, sodass die dementsprechend mit der Prägung versehen Kunststoffumreifungsbänder vor allem hinsichtlich des maschinellen Spannens und Verschweißens vorteilhafte Eigenschaften aufweisen.

Es kann aber auch zweckmäßig sein, wenn der Prägevorgang bei einer Temperatur, ausgewählt aus einem Bereich zwischen 40 °C und 190 °C unterhalb der Schmelztemperatur des Kunststoffmaterials durchgeführt wird.

Dadurch können Beschädigungen im Zuge des Prägevorgangs hintangehalten werden, da eine ausreichende Verformbarkeit des thermoplastischen Kunststoffmaterials bereitgestellt werden kann. Dennoch wird die durch den vorangegangenen Verstreckungsvorgang eingebrachte Vorzugsorientierung der Makromolekülketten nicht maßgeblich beeinflusst. Der angegeben Relativ-Temperaturbereich ist außerdem zweckmäßig, weil die eingebrachte Prägung bzw. die Prägestruktur unmittelbar nach dem Prägen zumindest weitestgehend erhalten werden kann. Der Temperaturbereich, bei welchem der Prägevorgang durchgeführt wird, kann hierbei auch unter Berücksichtigung des ausgewählten Kunststoffmaterials gewählt werden.

Bei einer bevorzugten Verfahrensvariante kann vorgesehen sein, dass der verstreckte Strang zwischen wenigstens zwei einander gegenüberliegenden, gegensinnig rotierenden Prägewalzen hindurchgeführt wird, und dass mittels der beiden Prägewalzen beide Oberflächen des verstreckten Stranges mit jeweils einer Prägung versehen werden.

Dies kann unter anderem deshalb von Vorteil sein, weil für eine maschinelle Verarbeitung zur Bildung einer Umreifung eine Prüfung, ob eine geprägte Oberfläche zum Arbeitsbereich ausgerichtet ist, erübrigt werden kann. Im Besonderen kann auch der eigentliche Reibschweißvorgang weiter verbessert werden, da sich die eingebrachte Reibenergie auf eine kleinere Fläche verteilt. Dadurch kann ein effizienteres bzw. schnelleres Erweichen des Kunststoffmaterials erreicht werden, sodass sowohl der erforderliche Energieaufwand, als auch die benötigte Zeit zum Verschweißen reduziert werden können.

Hierbei kann es ferner zweckmäßig sein, wenn Prägewalzen eingesetzt werden, welche jeweils verglichen miteinander Fortsätze mit unterschiedlich ausgeformten Plateauflächen eingesetzt werden, und dass mittels der beiden Prägewalzen die Oberflächen des verstreckten Stranges mit Vertiefungen mit jeweils unterschiedlich ausgeformten Basisflächen versehen werden.

Hierdurch kann auf einer Bandoberfläche eines Kunststoffumreifungsbandes beispielsweise eine hinsichtlich eines maschinellen Führens bzw. Spannens optimierte Prägestruktur eingebracht werden. Auf die andere Bandoberfläche kann zum Beispiel eine hinsichtlich eines Reibschweißvorgangs optimierte Prägestruktur eingebracht bzw. aufgebracht werden. Bei einer maschinellen Verarbeitung zur Bildung einer Umreifung können die beiden, unterschiedlichen Prägestrukturen, bzw. unterschiedlichen Basisflächen der Vertiefungen, in synergistischer Art und Weise ergänzen. Im Ganzen können hierdurch hinsichtlich eines maschinellen Umreifungsvorganges nochmalig weiter verbesserte Kunststoffumreifungsbänder hergestellt werden.

Offenbart ist weiter ein Kunststoffumreifungsband mit einer Längserstreckung und normal dazu, einer Bandbreite und einer variablen Banddicke des Kunststoffumreifungsbandes, welche Längserstreckung und Bandbreite zwei durch eine jeweilige Banddicke voneinander distanzierte Bandoberflächen ausbilden. Das Kunststoffumreifungsband umfasst ein teilkristallines, thermoplastisches Kunststoffmaterial, welches Kunststoffmaterial in Richtung der Längserstreckung monoaxial oder überwiegend monoaxial verstreckt ist. Zumindest eine der Bandoberflächen ist durchgängig mit einer Prägung versehen.

Hierbei ist vorgesehen, dass die Prägung über die Bandoberfläche verteilte Vertiefungen aufweist, welche Vertiefungen ebene oder überwiegend ebene Basisflächen aufweisen. Zwischen 44 % und 55 % einer in senkrechter Draufsicht betrachteten Parallelprojektion der gesamten, zumindest einen geprägten Bandoberfläche des Kunststoffumreifungsbandes ist bzw. sind durch die Summe der Basisflächen der Vertiefungen gebildet.

Ein entsprechendes Kunststoffumreifungsband kann im Besonderen in einem Verfahren mit den in dieser Beschreibung angegebenen Verfahrensmaßnahmen hergestellt werden. Zwischen den Vertiefungen sind jeweils stegartige Erhöhungen ausgebildet, welche die einzelnen Vertiefungen voneinander trennen. Die Banddicke des Kunststoffumreifungsbandes ist im Bereich der Vertiefungen im Vergleich zu der Banddicke im Bereich der Erhöhungen geringer. Die Basisflächen der Vertiefungen können im Prinzip beliebig ausgestaltet bzw. ausgeformt sein, wobei bestimmte, geometrische Ausgestaltungsformen der Basisflächen zusätzliche Vorteile mit sich bringen können, wie dies noch beschrieben wird. Die Abmessungen bzw. Ausdehnungen der Basisflächen der Vertiefungen können beispielsweise im dreistelligen Mikrometer- bis einstelligen Millimeterbereich liegen.

Ein Kunststoffumreifungsband mit den angegebenen Merkmalen weist gute mechanische Eigenschaften, insbesondere hohe Zugfestigkeiten auf. Außerdem ist das Kunststoffumreifungsband sehr gut für eine maschinelle Verarbeitung zur Bildung von Umreifungen geeignet. Im Besonderen hat sich gezeigt, dass das Kunststoffumreifungsband hervorragend maschinell geführt, gespannt und verschweisst werden kann.

Überraschenderweise hat sich hierbei herausgestellt, dass das verhältnismäßig große Flächenausmaß an eingebrachten Vertiefungen bzw. Basisflächen der Vertiefungen, sich nicht signifikant auf die mechanischen Eigenschaften des Kunststoffumreifungsbandes auswirkt. Dies kann mit den zwischen den Vertiefungen befindlichen Erhöhungen in Zusammenhang stehen. So kann ein Kunststoffumreifungsband mit hoher Zugfestigkeit bereitgestellt werden, bei welchem das Risiko eines Einreissen während der Bildung einer Umreifung, oder nachher, trotz des bezogen auf die gesamte Fläche hohen Prozentsatzes an Basisflächen der Vertiefungen, möglichst minimiert ist.

Vorteilhaft ist außerdem, dass das Kunststoffumreifungsband ein verhältnismäßig geringes Flächengewicht bzw. Metergewicht aufweisen kann, und dennoch hervorragende Eigenschaften, insbesondere hohe Zugfestigkeiten aufweisen kann. Die verringerte Banddicke im Bereich der Vertiefungen kann hierbei zumindest weitestgehend durch die zwischen den Vertiefungen ausgebildeten Erhöhungen ausgeglichen sein. Hinsichtlich einer maschinellen Verarbeitung zur Bildung einer Umreifung ist von zusätzlich von besonderem Vorteil, dass eine Steifigkeit durch die angegebenen Merkmale bzw. aufgrund der erhöhten Banddicke im Bereich der stegförmigen Erhöhungen, sogar noch weiter gesteigert werden kann.

Bei einer Weiterbildung des Kunststoffumreifungsbandes kann vorgesehen sein, dass zwischen 45 % und 52 % einer in senkrechter Draufsicht betrachteten Parallelprojektion der gesamten, zumindest einen geprägten Bandoberfläche des Kunststoffumreifungsbandes durch die Summe der Basisflächen der Vertiefungen gebildet ist bzw. sind.

Ein solche Kunststoffumreifungsband weist hinsichtlich einer teil- oder vollautomatischen, maschinellen Verarbeitung zur Bildung von Umreifungen besonders vorteilhafte Eigenschaften auf.

Außerdem ist vorgesehen, dass die Basisflächen der Vertiefungen Umgrenzungslinien aufweisen, welche Umgrenzungslinien in senkrechter Draufsicht auf die Basisflächen durch geschlossenen, ovale Kurven gebildet sind.

Hierdurch kann ein Kunststoffumreifungsband bereitgestellt werden, welches vor allem hinsichtlich eines maschinellen Spannens und Verschweißens durch Reibschweißen nochmalig weiter verbesserte Eigenschaften aufweist. Dies vor allem deshalb, da bei der Bildung einer Umreifung eine möglichst gleichmäßige Kraftübertragung von einer Spann- bzw. Verschlussvorrichtung auf die Kunststoffumreifungsbänder erfolgen kann. Im Zuge des Verschweißvorganges kann außerdem ein schnelleres Erweichen des thermoplastischen Kunststoffmaterials erzielt werden, wodurch die zur Bildung einer Umreifung erforderliche Zeitspanne verkürzt werden kann. Im Gegensatz zu abschnittsweise geraden Umgrenzungslinien der Basisflächen, weisen Vertiefungen mit Basisflächen mit ovalen Umgrenzungslinien eine deutlich geringere Tendenz zu einem nachteiligen, gegenseitigen Verhaken der beiden Längsenden eines Umreifungsbandes im Zuge eines Verschweißvorgange auf.

Ferner kann es von Vorteil sein, wenn eine Tiefe der Vertiefungen zwischen 50 µm und 400 µm beträgt.

Durch ein Beschränken der Tiefe der Vertiefungen, kann Beschädigungen des Kunststoffumreifungsbandes im Zuge einer Benutzung zur Bildung einer Umreifung, wirksam entgegengewirkt werden. Trotzdem können die dementsprechenden Vertiefungen eine Tiefe aufweisen, welche ausreichend zum Erzielen vorteilhafter Eigenschaften, vor allem hinsichtlich des maschinellen Spannens und Verschweißens des Kunststoffumreifungsbandes sind. Im Speziellen kann eine Tiefe der Vertiefungen zwischen 100 µm und 200 µm betragen.

Als thermoplastisches Kunststoffmaterial kann das Kunststoffumreifungsband im Prinzip alle verstreck- bzw. reckbaren, teilkristallinen Kunststoffmaterialien oder Mischungen bzw. Blends dieser Kunststoffmaterialien aufweisen. Ein thermoplastisches Kunststoffmaterial im Sinne dieser Beschreibung ist ein schmelzbarer bzw. schweißbarer, polymerer organischer Festkörper, welcher synthetisch oder halbsynthetisch aus monomeren, organischen Molekülen und/oder Biopolymeren hergestellt werden kann. Ein teilkristallines, thermoplastisches Kunststoffmaterial kann beispielsweise aus der Gruppe der Polyolefine, Polyester oder Polyamide, oder Mischungen dieser Polymere ausgewählt werden. Dem bereitgestellten Kunststoffmaterial können außerdem noch Füllstoffe bzw. Additive beigemengt werden.

Im Besonderen kann vorgesehen sein, dass das verstreckte Kunststoffmaterial durch ein Polyolefin, insbesondere durch Polypropylen gebildet ist

Es kann aber auch zweckmäßig sein, wenn das verstreckte Kunststoffmaterial durch einen Polyester, insbesondere durch Polyethylenterephtalat gebildet ist.

In beiden Fällen kann jeweils ein Kunststoffumreifungsband bereitgestellt werden, welches sehr gute mechanische Eigenschaften, insbesondere große Zugfestigkeit aufweist.

Bei einer Weiterbildung des Kunststoffumreifungsbandes kann vorgesehen sein, dass beide Bandoberflächen eine Prägung aufweisen.

Hierdurch kann im Besonderen ein Reibschweißvorgang zum Verbinden der beiden Längsenden weiter verbessert werden, da sich die eingebrachte Reibenergie auf eine kleinere Fläche verteilt. Es kann ein effizienteres bzw. schnelleres Erweichen des Kunststoffmaterials erreicht werden, sodass sowohl der erforderliche Energieaufwand, als auch die benötigte Zeit zum Verschweißen reduziert werden können. Vorteilhaft ist außerdem, dass für eine maschinelle Verarbeitung zur Bildung einer Umreifung eine Prüfung, ob eine geprägte Oberfläche zum Arbeitsbereich ausgerichtet ist, erübrigt werden kann.

In diesem Zusammenhang kann es weiters von Vorteil sein, wenn die Bandoberflächen des Kunststoffumreifungsbandes verglichen miteinander jeweils Vertiefungen mit unterschiedlich geformten Basisflächen aufweisen.

Hierdurch kann beispielsweise auf einer Bandoberfläche eine hinsichtlich eines maschinellen Führens bzw. Spannens optimierte Prägestruktur ausgebildet sein. Auf der anderen Bandoberfläche kann das Kunststoffumreifungsband zum Beispiel eine hinsichtlich eines Reibschweißvorgangs optimierte Prägestruktur aufweisen. Bei einer maschinellen Verarbeitung zur Bildung einer Umreifung können die beiden, unterschiedlichen Prägestrukturen, bzw. unterschiedlichen Basisflächen der Vertiefungen, in synergistischer Art und Weise ergänzen. Im Ganzen können hierdurch hinsichtlich eines maschinellen Umreifungsvorganges nochmalig weiter verbesserte Kunststoffumreifungsbänder bereitgestellt werden.

Zum besseren Verständnis der Erfindung wird diese anhand der nachfolgenden Figuren näher erläutert.

Es zeigen jeweils in stark vereinfachter, schematischer Darstellung:
- Fig. 1: Eine schematische Darstellung einer Anlage zur Herstellung eines Kunststoffumreifungsbandes, welche das Verfahren zur Herstellung veranschaulicht;
- Fig. 2: ausschnittsweise eine Schnittansicht eines verstreckten Stranges und einer Prägevorrichtung mit Prägewalzen, welche einen Prägevorgang veranschaulicht;
- Fig. 3: ausschnittsweise eine Draufsicht auf eine Bandoberfläche bzw. eine Parallelprojektion einer Bandoberfläche eines geprägten Kunststoffumreifungsbandes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Zur Vermeidung von Wiederholungen werden in der folgenden Beschreibung einzelne Ausführungsvarianten nicht mehr explizit angeführt bzw. grafisch veranschaulicht. Es wird dazu jeweils auch auf die voranstehende Beschreibung verwiesen. In der gesamten Beschreibung wird der Begriff "Verstrecken" synonym zum Begriff "Recken" verwendet.

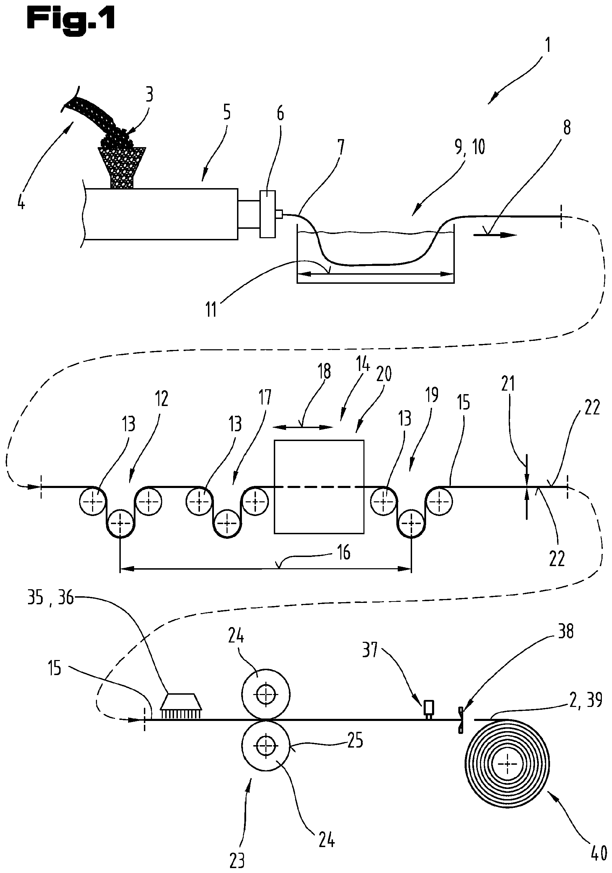

In der Fig. 1 ist eine Vorrichtung 1 zur Herstellung bzw. ein Verfahren zur Herstellung von Kunststoffumreifungsbändern 2 schematisch veranschaulicht. Zu Beginn des Verfahrens wird ein teilkristallines, thermoplastisches Kunststoffmaterial 3 bereitgestellt.

Im Prinzip kann jedwedes teilkristallines, thermoplastisches Kunststoffmaterial 3 bereitgestellt werden, welches thermoplastisch rohgeformt, verstreckt, und oberflächenbehandelt werden kann. Zum Beispiel kann vorgesehen sein, dass ein Kunststoffmaterial 3 aus der Gruppe der Polyolefine, Polyester, Polyamide, oder aus Mischungen bzw. Blends dieser polymeren Materialien bereitgestellt wird. Bevorzugt wird als Kunststoffmaterial 3 ein Polyolefin oder Polyester bereitgestellt, da sich diese Kunststoffmaterialien im besonderem Maße zur Herstellung von Umreifungsbändern eignen. So sind Polyolefine und Polyester sehr gut extrudierbar, und können außerdem durch Verstrecken zu Kunststoffumreifungsbändern 2 mit hoher Zugfestigkeit verarbeitet werden können. Im Speziellen kann ein Kunststoffmaterial 3 bereitgestellt werden, welches zumindest vorwiegend durch Polypropylen oder durch Polyethylenterephthalat gebildet ist.

Wie in der Fig. 1 schematisch dargestellt ist, kann das teilkristalline, thermoplastische Kunststoffmaterial über eine Zuführ- bzw. Dosiervorrichtung 4 einer Extrusionsvorrichtung 5 zugeführt bzw. zudosiert werden. Hierbei können dem Kunststoffmaterial 3 auch Füllstoffe und Additive, beispielsweise Farbstoffe, Antioxidantien und/oder andere Hilfsstoffe beigemengt werden. In der Extrusionsvorrichtung 5, beispielsweise in einem Schneckenextruder, wird das thermoplastische Kunststoffmaterial 3 sodann aufgeschmolzen, und via ein an der Extrusionsvorrichtung 5 angeordnetes bzw. befestigtes Extrusionswerkzeug 6 extrudiert.

Hierzu kann vorgesehen sein, dass das Extrusionswerkzeug 6 eine oder mehrere Düse(n), insbesondere Düsen mit einem schlitzförmigen Querschnitt aufweist, durch welche Schlitzdüse(n) das geschmolzene Kunststoffmaterial gepresst bzw. zu einem bandförmigen Kunststoffstrang 7 oder zu mehreren, bandförmigen Kunststoffsträngen 7 extrudiert wird. Im Falle, dass mehrere, band- bzw. streifenförmige Kunststoffstränge 7 extrudiert werden, können diese die nachfolgenden Verfahrensschritte gemeinsam durchlaufen. Alternativ kann auch vorgesehen, dass das Extrusionswerkzeug 6 eine Düse bzw. Schlitzdüse mit großer Querschnittsbreite, also eine Breitschlitzdüse umfasst, sodass ein folienförmiger Kunststoffstrang 7 mit großer Breitenerstreckung extrudiert wird. Ein derartiger, folienförmiger Kunststoffstrang 7 kann nach Durchführung weiterer Verfahrensschritte in einem Konfektionierungsschritt, jeweils entlang der Längsausrichtung des Kunststoffstranges 7 in streifen- bzw. bandförmige Stränge bzw. Bänder vereinzelt werden, um Umreifungsbänder mit geeigneten Dimensionen bzw. Breitenerstreckungen herzustellen. Jedenfalls wird durch Extrusion mittels der Extrusionsvorrichtung 5 wenigstens ein extrudierter Kunststoffstrang 7 erzeugt, dessen Rohform bzw. Roh-Querschnittsgeometrie via der Düse bzw. den Düsen an dem Extrusionswerkzeug 6 zumindest im Wesentlichen festlegbar ist.

Nach der Extrusion kann eine Abkühlung des extrudierten Kunststoffstranges 7 erfolgen, wie dies in der Fig. 1 dargestellt ist. Hierdurch kann die Rohform bzw. Querschnittsgeometrie des extrudierten Kunststoffstranges 7 konserviert werden. Im Prinzip kann hierzu ein passives Abkühlen des extrudierten Kunststoffstranges 7 durch Umgebungsluft durchgeführt werden. Gegebenenfalls kann zum Abkühlen auch ein Luftstrom eingesetzt werden. Vorzugsweise wird der extrudierte Kunststoffstrang 7 zum effizienten Abkühlen in Führungs- bzw. Transportrichtung 8 durch eine Abkühlvorrichtung 9 geführt, wie dies in der Fig. 1 gezeigt ist. Die dargestellte Abkühlvorrichtung 9 kann etwa durch ein Wasserbad 10 gebildet sein. Die Abkühlvorrichtung 9 kann zum Beispiel Wasser mit einer bestimmten Temperatur enthalten, durch welches der extrudierte Kunststoffstrang 7 geführt wird. Eine Temperatur des Kunststoffstrang 7 nach dem Abkühlen kann etwa bei gegebener Temperatur einer Kühlflüssigkeit bzw. des Wassers der Abkühlvorrichtung 9, durch eine bestimmte Länge 11 der Abkühlvorrichtung 9 beeinflusst bzw. gesteuert werden.

Zum Abziehen bzw. Führen des Kunststoffstranges 7 in Transportrichtung 8 kann nach der Abkühlvorrichtung 9 eine Abziehvorrichtung 12 angeordnet sein. Wie in der Fig. 1 dargestellt ist, kann eine solche Abziehvorrichtung 12 mehrere, mit bestimmter Winkelgeschwindigkeit rotierende Rollenelemente 13 umfassen, welche zum Beispiel ein Galettentrio ausbilden. Im Prinzip kann hierbei auch vorgesehen sein, dass ein oder mehrere Rollenelement(e) temperierbar ausgeführt sind, sodass der Kunststoffstrang 7 für die nachfolgende Weiterverarbeitung, insbesondere den Reckvorgang erwärmt oder abgekühlt werden können. Hierzu kann ein Rollenelement 13 beispielsweise mittels Temperierungsflüssigkeiten oder elektrisch temperierbar sein. Alternativ können auch andere Mittel zum Temperieren eines Kunststoffstranges 7, wie etwa Sprinklervorrichtungen, Tauchbäder oder etwa Infrarotstrahler zum Erwärmen oder Abkühlen des Kunststoffstranges 7 angeordnet sein.

Der Reckvorgang bzw. das Verstrecken des Kunststoffstranges 7 zu einem verstreckten Strang 15, wird wie in der Fig. 1 dargestellt, mittels eines Reckwerks 14 durchgeführt. Hierzu kann entlang einer Reckstrecke 16 des Reckwerks 14 eine weitere Transport- bzw. Abziehvorrichtung 17 mit Rollenelementen 13 angeordnet sein. Alle in der Fig. 1 dargestellten Rollenelemente 13 können bei der Durchführung des Verfahrens zur jeweiligen Festlegung einer Abzieh- bzw. Verfahrgeschwindigkeit für den Kunststoffstrang 7 mit jeweils unterschiedlichen Winkelgeschwindigkeiten rotieren. Hinsichtlich der Winkelgeschwindigkeit bei der Rotation ist hierbei natürlich auch ein jeweiliger Umfang der einzelnen Rollenelemente 13 zu berücksichtigen. Zur besseren Veranschaulichung weisen alle Rollenelemente 13 in der Fig. 1 denselben Umfang auf. Grundsätzlich können solche Rollenelemente 13 natürlich auch unterschiedliche Umfänge aufweisen.

Bei dem in der Fig. 1 dargestellten Ausführungsbeispiel kann vorgesehen sein, dass die Rollenelemente 13 der Abziehvorrichtung 17 mit höherer Winkelgeschwindigkeit rotieren als jene Rollenelemente 13 der vorangehenden Abziehvorrichtung 12. Hierdurch ist eine Abziehgeschwindigkeit bzw. Transportgeschwindigkeit der weiteren Abziehvorrichtung 17 größer gewählt als die Abziehgeschwindigkeit für den Kunststoffstrang 7 der vorangehenden Abziehvorrichtung 12, und wird der Kunststoffstrang 7 entlang einer Hauptverstreckungsrichtung 18 verstreckt, bzw. anders ausgedrückt in die Länge gezogen.

Des Weiteren kann am Ende des Reckwerks 14 bzw. der Reckstrecke 16 eine zusätzliche Transport- bzw. Abziehvorrichtung 19 vorgesehen sein. Bei dieser zusätzlichen Abziehvorrichtung 19 kann im Betrieb der Vorrichtung 1 eine nochmals höhere Abziehgeschwindigkeit für den Kunststoffstrang 7, als jene Abziehgeschwindigkeit der bezogen auf die Transportrichtung 8 vorher angeordneten Abziehvorrichtung 17, vorgesehen sein. Hierdurch kann der Kunststoffstrang 7 zwischen der weiteren Abziehvorrichtung 17 und der zusätzlichen Abziehvorrichtung 19 nochmals weiter in die Länge gezogen bzw. verstreckt werden. Insgesamt wird der Kunststoffstrang 7 in dem Reckwerk 14 bzw. entlang der Reckstrecke 16 monoaxial oder zumindest vorwiegend monoaxial entlang der Hauptverstreckungsrichtung 18 zu einem verstreckten Strang 15 gereckt bzw. verstreckt.

Ein Verstreckungsverhältnis für das Kunststoffmaterial 3 kann bei dem verstreckten Strang 15 aus einem Bereich zwischen 2 und 20 ausgewählt sein. Dies bezogen auf den extrudierten Kunststoffstrang 7 vor dem Verstreckungsvorgang. Im Zuge des Verstreckungsvorgangs wird also auch eine Dicke des Kunststoffstranges 7 durch das Verstrecken verringert. Bevorzugt wird ein Verstreckungsverhältnis für das Kunststoffmaterial 3 ausgewählt aus einem Bereich zwischen 3 und 15, insbesondere zwischen 4 und 12. Wie aus der Fig. 1 ersichtlich ist, kann das Verstrecken vorwiegend entlang der Hauptverstreckungsrichtung 18 ausgeführt werden. Geringfügige Verstreckungen bzw. Reckungen quer zur Hauptverstreckungsrichtung 18 können hierbei jedoch nicht gänzlich ausgeschlossen werden, weswegen ein verstreckter Strang 15 vorwiegend monoaxial verstreckt sein kann.

Das in der Fig. 1 dargestellte Ausführungsbeispiel für ein Reckwerk 14 dient nur zur schematischen Veranschaulichung, und können solche Reckwerke 14 natürlich noch weitere Elemente und Vorrichtung zur Duchführung bzw. Beeinflußung und Steuerung des Verstreckvorganges aufweisen. Zum Beispiel kann zur besseren Durchführung einer Reckung bzw. eines Verstreckungsvorgangs vorgesehen sein, dass entlang der Reckstrecke 16 oder mehrere Aufwärmvorrichtungen 20 vorgesehen sind. Durch solche Aufwärmvorrichtungen 20 kann ein Kunststoffstrang 7 auf eine für den Verstreckungsvorgang jeweils günstige Verarbeitungstemperatur gebracht werden, wobei eine vorteilhafte Verarbeitungstemperatur unter anderem von dem jeweils eingesetzten bzw. bereitgestellten Kunststoffmaterial 3 abhängt.

Nach dem Verstrecken liegt ein verstreckter Strang 15 vor, welcher aufgrund der nunmehr in das Kunststoffmaterial eingebrachten Vorzugs-Orientierung der Makromoleküle in der Hauptverstreckungsrichtung 18, ein erhöhtes Risiko für sogenanntes Aufspleissen, also eine Auftrennung bzw. Auffaserung entlang der Hauptverstreckungsrichtung 18 aufweist. Der verstreckte Strang 15 weist zwei durch eine Dicke 21 des verstreckten Stranges 15 voneinander beabstandete Oberflächen 22 auf.

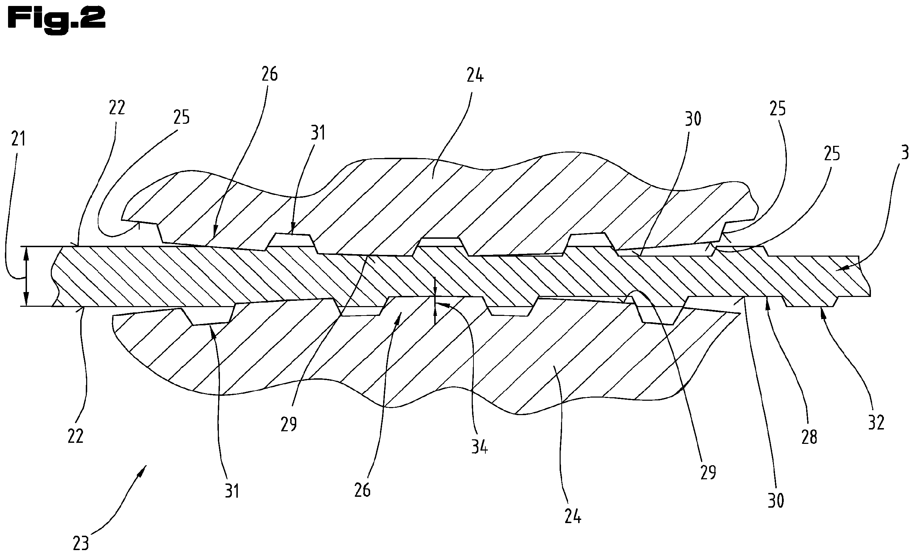

Wie weiters in der Fig. 1 dargestellt ist, wird zumindest eine Oberfläche 22 des verstreckten Stranges 15 mittels einer Prägevorrichtung 23 mit einer Prägung versehen. Hierzu weist die Prägevorrichtung 23 wenigstens eine Prägewalze 24 auf. Zur besseren Ersichtlichkeit ist der Prägevorgang bzw. die Prägevorrichtung 23 ausschnittsweise vergrößert in der Fig. 2 dargestellt, wobei in der Fig. 2 eine Schnittansicht eines verstreckten Stranges 15 und einer Prägevorrichtung 23 dargestellt ist. In der Fig. 2 werden für gleiche Teile gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen.

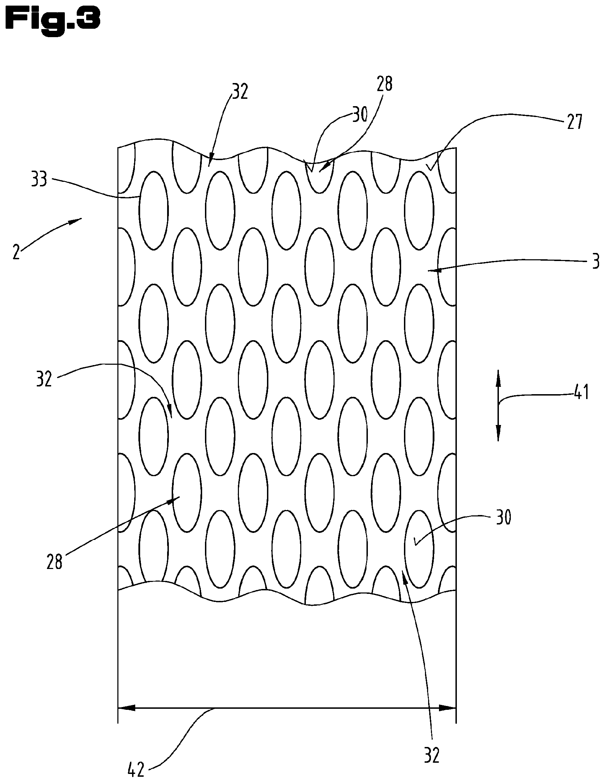

Wie in der Fig. 2 angedeutet ist, wird die zumindest eine Oberfläche 22 des verstreckten Stranges 15 mit einer Prägung, insbesondere einer durchgängigen Prägung versehen. Dies ist auch aus der ausschnittsweisen Darstellung in senkrechter Draufsicht bzw. der ausschnittsweise dargestellten Parallelprojektion einer Bandoberfläche 27 eines geprägten Kunststoffumreifungsbandes 2 gemäß der Fig. 3 ersichtlich. In der Fig. 3 werden wiederum für gleiche Teile gleiche Bezugszeichen bzw. Bauteilbezeichnungen wie in den vorangegangenen Fig. 1 und Fig. 2 verwendet. Um unnötige Wiederholungen zu vermeiden, wird auf die detaillierte Beschreibung in den vorangegangenen Fig. 1 und Fig. 2 hingewiesen bzw. Bezug genommen.

Die wenigstens eine Prägewalze 24 umfasst an ihrer Walzenoberfläche 25 Fortsätze 26 zum Erzeugen von Vertiefungen 28 auf der zumindest einen Oberfläche 22 des verstreckten Stranges 15. Hierbei wird als die wenigstens eine Prägewalze 24 eine Prägewalze 24 eingesetzt, deren Fortsätze 26 ebene oder vorwiegend ebene Plateauflächen 29 zur Erzeugung von ebenen oder überwiegend ebenen Basisflächen 30 der Vertiefungen 28 auf der zumindest einen Oberfläche 22 des verstreckten Stranges 15 aufweisen, wie dies aus der Fig. 2 ersichtlich ist. Die Fortsätze 26 können zum Beispiel auch als Prägestempel bezeichnet werden. Wesentlich ist außerdem, dass die Plateauflächen 29 der Fortsätze 26 derart dimensioniert werden, und die Fortsätze 26 derart voneinander beabstandet an der Walzenoberfläche 25 angeordnet werden, dass zwischen 44 % und 55 % einer jeweils gesamten, in senkrechter Draufsicht betrachteten Parallelprojektion der jeweils zumindest einen geprägten Bandoberfläche 27 der Kunststoffumreifungsbänder 2, siehe Fig. 3, durch die Summe der Basisflächen 30 der Vertiefungen 28 gebildet wird.

Bevorzugt wird als die wenigstens eine Prägewalze 24 eine Prägewalze 24 eingesetzt, deren Plateauflächen 29 der Fortsätze 26 derart dimensioniert werden, und deren Fortsätze 26 derart voneinander beabstandet an der Walzenoberfläche 25 angeordnet werden, dass zwischen 45 % und 52 % der jeweils gesamten, in senkrechter Draufsicht betrachteten Parallelprojektion der jeweils zumindest einen geprägten Bandoberfläche 27 der Kunststoffumreifungsbänder 2 durch die Summe der Basisflächen 30 der Vertiefungen 28 gebildet wird.

Im Prinzip kann durchaus vorgesehen sein, dass lediglich eine Oberfläche 22 eines verstreckten Stranges 15 mit einer Prägung versehen wird. Bevorzugt wird der verstreckte Strang 15 zwischen wenigstens zwei einander gegenüberliegenden, gegensinnig rotierenden Prägewalzen 24 hindurchgeführt, sodass mittels der beiden Prägewalzen 24 beide Oberflächen 22 des verstreckten Stranges 15 mit jeweils einer Prägung versehen werden, wie dies in der Fig. 1 und der Fig. 2 dargestellt ist. Hierdurch können hinsichtlich der Verarbeitbarkeit zu Umreifungen, nochmalig weiter verbesserte Kunststoffumreifungsbänder 2 hergestellt werden.

Die beiden Prägewalzen 24 sind derart in Bezug zu den beiden Oberflächen 22 angeordnet, dass die Fortsätze auf einen durchlaufenden, verstreckten Strang 15 einwirken, und die Vertiefungen 28 erzeugen. Dies bewirkt eine Materialverteilung des Kunststoffmaterials 3, welches während des Prägevorgangs zumindest teilweise in zwischen den Fortsätzen 26 der Prägewalze(n) 24 angeordnete, nutartige Einkerbungen 31 eindringt. Dadurch werden zwischen den Vertiefungen 28 bzw. zwischen den Basisflächen 30 stegartige Erhöhungen 32 in einem verstreckten Strang 15 gebildet, wie dies in der Fig. 2 dargestellt ist. Eine Banddicke des Kunststoffumreifungsbandes wird somit durch das Prägen bzw. im Zuge des Prägevorgangs im Bereich der Vertiefungen 28 erniedrigt und im Bereich der Erhöhungen 32 zumindest abschnittsweise erhöht. Die Erhöhungen 32 können auch als Erhebungen bezeichnet werden.

Wie weit das Kunststoffmaterial 3 während des Prägevorgangs in die Einkerbungen 31 der wenigstens einen Prägewalze 24 eindringt, hängt unter anderem von dem durch die Prägewalze(n) auf den verstreckten Strang 15 ausgeübten Druck, sowie der grundsätzlichen, temperaturabhängigen Verformbarkeit des Kunststoffmaterials 3 ab. Dadurch, und durch die Ausgestaltungsform der Fortsätze 26, wird auch die Geometrie und die Dimensionen einer jeweiligen Erhöhung 32 beeinflusst. Die Ausgestaltungsform der Fortsätze bestimmt im Wesentlichen die Form der Vertiefungen 28, wobei die Vertiefungen 28 beispielsweise über abgewinkelte Flanken in die Erhöhungen 32 übergehen können, wie dies in der Fig. 2 veranschaulicht ist. Die geometrische Form und Begrenzung der Basisflächen 30 wird zumindest überwiegend durch die Form der Plateauflächen 29 der Fortsätze 26 bestimmt, wobei sich leichte Abweichungen zwischen Ausgestaltungsform und Dimensionen der Plateauflächen 29, und Ausgestaltungsform und Dimensionen der Basisflächen 30 der Vertiefungen 28 ergeben können. Dies aufgrund bzw. in Abhängigkeit der Beschaffenheit des Kunststoffmaterials 3, der Temperatur des Kunststoffmaterials 3 während dem Prägevorgang, und anderen Verfahrensparametern.

Die Plateauflächen 29 der Fortsätze 26 können zum Beispiel Abmessungen bzw. Ausdehnungen im dreistelligen Mikrometer- bis einstelligen Millimeterbereich aufweisen. Eine jeweilige geometrische Form einer Plateaufläche 29 wird im Zuge des Prägevorgangs jeweils wenigstens vorwiegend auf die bzw. in die Oberfläche 22 des verstreckten Stranges 15 übertragen, sodass die Basisflächen 30 der Vertiefungen 28 zumindest im Wesentlichen dieselbe geometrische Form und Dimensionen aufweisen, wie die Plateauflächen 29 der Fortsätze 26.

Erfindungsgemäss wird äls die wenigstens eine Prägewalze 24 eine Prägewalze 24 mit Fortsätzen 26 eingesetzt, deren Plateauflächen 29 durch geschlossene, ovale Kurven umgrenzt sind. Dadurch kann ein Kunststoffumreifungsband 2 hergestellt werden, dessen Vertiefungen 28 Basisflächen 30 mit Umgrenzungslinien 33 aufweisen, welche Umgrenzungslinien 33 in senkrechter Draufsicht auf die Basisflächen 30 durch geschlossenen, ovale Kurven gebildet sind, wie dies anhand der beispielhaft ellipsenförmig ausgestalteten Basisflächen 30 in der Fig. 3 veranschaulicht ist.

Die Plateauflächen 29 der Fortsätze 26 können zum Beispiel Abmessungen bzw. Ausdehnungen im dreistelligen Mikrometer- bis einstelligen Millimeterbereich aufweisen. Hierbei kann die Anzahl der Fortsätze 26 der Prägewalze(n) 24 entsprechend angepasst werden, sodass Kunststoffumreifungsbänder 2 hergestellt bzw. geprägt werden, deren Bandoberflächen 27, in senkrechter Draufsicht betrachteter Parallelprojektion der geprägten Bandoberflächen 27 zu 44 % bis 55 % durch die Summe der Basisflächen 30 der Vertiefungen 28 gebildet sind.

Bei dem Verfahren ist es auch vorgesehen, dass die wenigstens eine Prägewalze 24 im Zuge des Prägevorgangs relativ zu der, der Prägewalze 24 zugewandten Oberfläche 22 des verstreckten Stranges 15 derart positioniert wird, dass die Plateauflächen 29 der Fortsätze 26 in eine Eindringtiefe 34 zwischen 2 % und 48 % bezogen auf die Dicke 21 des verstreckten Stranges 15 vor dem Prägen, in den verstreckten Strang 15 eindringen, wie dies in der Fig. 2 angedeutet ist.

Des Weiteren kann es zweckmäßig sein, wenn der Prägevorgang bei einer Temperatur, ausgewählt aus einem Bereich zwischen 40 und 190 °C unterhalb der Schmelztemperatur des Kunststoffmaterials 3 durchgeführt wird. Hierzu kann zum Beispiel vorgesehen sein, dass wenigstens eine der in dem Ausführungsbeispiel in der Fig. 1 und ausschnittsweise in der Fig. 2 dargestellten Prägewalzen 24 temperierbar ausgeführt ist. Die Prägewalze(n) 24 können beispielsweise Kanäle zur Durchführung eines temperierten, flüssigen Mediums aufweisen. Auch ist zum Beispiel ein elektrisches Heizen wenigstens einer Prägewalze 24 möglich. Alternativ ist auch ein Temperieren des verstreckten Stranges 15 mittels einer vor der Prägevorrichtung 23 angeordneten Temperiervorrichtung 35 möglich. Als Beispiel für eine derartige vorgelagerte Temperiervorrichtung 35 ist in der Fig. 1 eine Berieselungsvorrichtung 36 dargestellt, mittels welcher ein verstreckter Strang 15 mit einer temperierten Flüssigkeit beaufschlagt werden kann. Als Temperiervorrichtung 35 können natürlich auch andere Mittel eingesetzt werden, beispielsweise Infrarotstrahler, Tauchbäder, Öfen, und so weiter.

Wie bereits beschrieben, und in den Ausführungsbeispielen gemäß der Fig. 1 und Fig. 2 auch dargestellt, werden bevorzugt beide Oberflächen 22 der verstreckten bzw. gerechten Stranges 15 jeweils mit einer Prägung versehen. In diesem Zusammenhang kann auch eine Ausführungsform sinnvoll sein, bei welcher Prägewalzen 24 eingesetzt werden, welche jeweils verglichen miteinander Fortsätze 26 mit unterschiedlich ausgeformten Plateauflächen 29 eingesetzt werden, und dass mittels der beiden Prägewalzen 24 die Oberflächen 22 des verstreckten Stranges 15 mit Vertiefungen 28 mit jeweils unterschiedlich ausgeformten Basisflächen 30 versehen werden.

Wie in der Fig. 1 veranschaulicht ist, können am Ende des Verfahrens zur Herstellung von Kunststoffumreifungsbändern 2 noch weitere Prozessschritte zur Konfektionierung eines verstreckten und geprägten Stranges 15 vorgesehen sein. Beispielsweise kann eine Teilungsvorrichtung 37 angeordnet sein, um einen verstreckten und oberflächenbehandelten Strang 15 in mehrere Teilstränge zu zerteilen. Dies ist insbesondere zweckmäßig um Kunststoffumreifungsbänder 2 aus einem folienförmigen Strang 15 mit verhältnismäßig großer Breitenerstreckung quer zur Transportrichtung 8 zu erhalten. Hierbei kann vorgesehen sein, dass ein solcher verstreckter und geprägter Strang 15 auf seine Breite gesehen zerteilt wird. Die Teilungsvorrichtung 37 kann zum Beispiel eine oder mehrere Schneidvorrichtung(en) aufweisen.

Zur Konfektionierung kann des Weiteren auch eine Stückelungsvorrichtung 38 vorgesehen sein. Eine solche Stückelungsvorrichtung 38 kann dazu ausgebildet sein, um einen Strang 15 oder mehrere, gegebenenfalls durch Zerteilen mit der Teilungsvorrichtung 37 erhaltene Stränge 15, in zur Lagerung oder zum Transport geeignete Stücke 39 zu schneiden. Zur Lagerung oder zum Transport können diese Stücke 39 beispielsweise auf Spulen 40 aufgewickelt werden, wie dies in der Fig. 1 dargestellt ist. Solche Spulen 40 können im Besonderen für eine Großmengenportionierung verwendet werden, wobei Kunststoffumreifungsbänder 2 für den endgültigen Gebrauch oder Verkauf in jeweils geeigneten Längen von einer derartigen Spule 40 abgeschnitten werden können. Alternativ ist natürlich auch eine direkte Stückelung zu gebrauchsfertigen Längen von Kunststoffumreifungsbändern 2 möglich.

In der Fig. 3 ist ausschnittsweise ein gebrauchsfertiges Kunststoffumreifungsband 2 in senkrechter Draufsicht auf eine der geprägten Bandoberflächen 27 bzw. als Parallelprojektion dargestellt. Das Kunststoffumreifungsband 2 kann im Besonderen mittels des beschriebenen Verfahrens hergestellt werden.

Das ausschnittsweise dargestellte Kunststoffumreifungsband 2 weist eine Längserstreckung 41 und eine Bandbreite 42 auf. Die Längserstreckung 41 und die Bandbreite 42 bilden zwei durch eine jeweilige Banddicke voneinander distanzierte Bandoberflächen 27 aus. Eine dieser Bandoberflächen 27 ist in senkrechter Draufsicht bzw. als Parallelprojektion in der Fig. 3 dargestellt. Eine jeweilige Banddicke ist hierbei jeweils senkrecht auf die Längserstreckung 41 und die Bandbreite 42 ausgerichtet, und ist die Banddicke aufgrund der in das Kunststoffumreifungsband 2 eingebrachten, wenigstens einen Prägung variabel.

Das Kunststoffumreifungsband 2 umfasst ein teilkristallines, thermoplastisches Kunststoffmaterial 3, welches Kunststoffmaterial 3 in Richtung der Längserstreckung 41 monoaxial oder überwiegend monoaxial verstreckt ist. Das teilkristalline, thermoplastische Kunststoffmaterial 3 kann beispielsweise aus der Gruppe der Polyolefine, Polyester, Polyamide, oder aus Mischungen bzw. Blends dieser polymeren Materialien gewählt sein. Bevorzugt wird als Kunststoffmaterial 3 ein Polyolefin oder Polyester gewählt, da sich diese Kunststoffmaterialien im besonderem Maße zur Herstellung von Umreifungsbändern eignen. Zum Beispiel kann das Kunststoffmaterial 3 durch Polypropylen oder Polyethylenterephthalat gebildet sein.

Ein Verstreckungsverhältnis des Kunststoffmaterials 3 des Kunststoffumreifungsbandes 2 kann zwischen 2 und 20 betragen. Dies bezogen auf das Kunststoffmaterial 3 vor dem Verstreckungsvorgang. Vorzugsweise beträgt das Verstreckungsverhältnis zwischen 3 und 15, insbesondere zwischen 4 und 12. Wie aus der Fig. 3 ersichtlich ist, ist zumindest eine Bandoberfläche 27 mit einer Prägung versehen.

Hierbei weist die Prägung über die Bandoberfläche 27 verteilte Vertiefungen 28 auf, welche Vertiefungen 28 ebene oder überwiegend ebene Basisflächen 30 aufweisen, wie dies am besten durch Zusammenschau der Fig. 2 und Fig. 3 ersichtlich ist. Zwischen 44 % und 55 % der in senkrechter Draufsicht betrachteten Parallelprojektion der gesamten, zumindest einen geprägten Bandoberfläche 27 des Kunststoffumreifungsbandes 2, ist durch die Summe der Basisflächen 30 der Vertiefungen 28 gebildet. Eine jeweilige Basisfläche 30 der Vertiefungen 28 kann jeweils auch als Grundfläche einer Vertiefung 28 bezeichnet werden. Bevorzugt ist zwischen 45 % und 52 % der in senkrechter Draufsicht betrachteten Parallelprojektion der gesamten, zumindest einen geprägten Bandoberfläche 27 des Kunststoffumreifungsbandes 2 durch die Summe der Basisflächen 30 der Vertiefungen 28 gebildet.

Wie anhand des in der Fig. 3 gezeigten Beispiels dargestellt ist, weisen die Basisflächen 30 der Vertiefungen 28 Umgrenzungslinien 33 auf, welche Umgrenzungslinien 33 in senkrechter Draufsicht auf die Basisflächen 30 durch geschlossenen, ovale Kurven gebildet sind. Zum Beispiels können die Umgrenzungslinien 33 der Basis- bzw. Grundflächen 30 der Vertiefungen 28 ellipsenförmig ausgeformt sein.

Eine Tiefe der Vertiefungen 28 kann zum Beispiel zwischen 50 und 400 µm betragen Im Besonderen kann vorgesehen sein, dass eine Tiefe der Vertiefungen 28 zwischen 100 µm und 200 µm beträgt.

In der Fig. 3 ist zur besseren Veranschaulichung eine der beiden geprägten Bandoberflächen 27 des Kunststoffumreifungsbandes 2 dargestellt. Bei einer bevorzugten Ausgestaltungsform des Kunststoffumreifungsbandes 2 beide Bandoberflächen 27 eine durchgängige Prägung aufweisen, wie dies auch anhand der Fig. 2 erkennbar ist. In diesem Fall kann außerdem vorgesehen sein, dass die Bandoberflächen 27 verglichen miteinander jeweils Vertiefungen 28 mit unterschiedlich ausgeformten Basisflächen 30 aufweisen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vorrichtung | 31 | Einkerbung |
| 2 | Kunststoffumreifungsband | 32 | Erhöhung |
| 3 | Kunststoffmaterial | 33 | Umgrenzungslinie |
| 4 | Dosiervorrichtung | 34 | Eindringtiefe |
| 5 | Extrusionsvorrichtung | 35 | Temperiervorrichtung |
| 6 | Extrusionswerkzeug | 36 | Berieselungsvorrichtung |
| 7 | Kunststoffstrang | 37 | Teilungsvorrichtung |
| 8 | Transportrichtung | 38 | Stückelungsvorrichtung |
| 9 | Abkühlvorrichtung | 39 | Stück |
| 10 | Wasserbad | 40 | Spule |
| 11 | Länge | 41 | Längserstreckung |
| 12 | Abziehvorrichtung | 42 | Bandbreite |
| 13 | Rollenelement | | |
| 14 | Reckwerk | | |
| 15 | Strang | | |
| 16 | Reckstrecke | | |
| 17 | Abziehvorrichtung | | |
| 18 | Hauptverstreckungsrichtung | | |
| 19 | Abziehvorrichtung | | |
| 20 | Aufwärmvorrichtung | | |
| 21 | Dicke | | |
| 22 | Oberfläche | | |
| 23 | Prägevorrichtung | | |
| 24 | Prägewalze | | |
| 25 | Walzenoberfläche | | |
| 26 | Fortsatz | | |
| 27 | Bandoberfläche | | |
| 28 | Vertiefung | | |
| 29 | Plateaufläche | | |
| 30 | Basisfläche | | |

## Patentansprüche

1. Verfahren zur Herstellung von Kunststoffumreifungsbändern (2), umfassend
Bereitstellung eines teilkristallinen, thermoplastischen Kunststoffmaterials (3),
Aufschmelzen des Kunststoffmaterials (3),
Extrusion des geschmolzenen Kunststoffmaterials mittels einer Extrusionsvorrichtung (5) zu wenigstens einem Kunststoffstrang (7),
Abkühlen des extrudierten Kunststoffstranges (7),
monoaxiales oder überwiegend monoaxiales Verstrecken des Kunststoffstranges (7) zu einem verstreckten Strang (15) mittels zumindest eines Reckwerks (14), welcher verstreckte Strang (15) zwei durch eine Dicke (21) des verstreckten Stranges (15) voneinander beabstandete Oberflächen (22) aufweist,
wobei zumindest eine Oberfläche (22) des verstreckten Stranges (15) mittels einer Prägevorrichtung (23), aufweisend wenigstens eine Prägewalze (24), mit einer Prägung versehen wird, welche Prägewalze (24) an ihrer Walzenoberfläche (25) Fortsätze (26) zum Erzeugen von Vertiefungen (28) auf der zumindest einen Oberfläche (22) des verstreckten Stranges umfasst, wobei als die wenigstens eine Prägewalze (24) eine Prägewalze (24) eingesetzt wird, deren Fortsätze (26) ebene oder vorwiegend ebene Plateauflächen (29) zur Erzeugung von ebenen oder überwiegend ebenen Basisflächen (30) der Vertiefungen (28) auf der zumindest einen Oberfläche (22) des verstreckten Stranges (15), aufweisen,
**dadurch gekennzeichnet, dass**
die Plateauflächen (29) der Fortsätze (26) derart dimensioniert werden, und wobei die Fortsätze (26) derart voneinander beabstandet an der Walzenoberfläche (25) angeordnet werden, dass zwischen 44 % und 55 % einer jeweils gesamten, in senkrechter Draufsicht betrachteten Parallelprojektion der jeweils zumindest einen geprägten Bandoberfläche (27) der Kunststoffumreifungsbänder (2) durch die Summe der Basisflächen (30) der Vertiefungen (28) gebildet wird,
und dass die wenigstens eine Prägewalze (24) relativ zu der, der Prägewalze (24) zugewandten Oberfläche (22) des verstreckten Stranges (15) derart positioniert wird, dass die Plateauflächen (29) der Fortsätze (26) im Zuge der Prägung in eine Eindringtiefe (34) zwischen 2 % und 48 % bezogen auf die Dicke (21) des verstreckten Stranges (15) vor dem Prägen, in den verstreckten Strang (15) eindringen,
und dass als die wenigstens eine Prägewalze (24) eine Prägewalze (24) mit Fortsätzen (26) eingesetzt wird, deren Plateauflächen (29) durch geschlossene, ovale Kurven umgrenzt sind.

2. Verfahren nach Anspruch 1, **dadurch gekennzeichnet, dass** als die wenigstens eine Prägewalze (24) eine Prägewalze (24) eingesetzt wird, deren Plateauflächen (29) der Fortsätze (26) derart dimensioniert werden, und deren Fortsätze (26) derart voneinander beabstandet an der Walzenoberfläche (25) angeordnet werden, dass zwischen 45 % und 52 % der jeweils gesamten, in senkrechter Draufsicht betrachteten Parallelprojektion der jeweils zumindest einen geprägten Bandoberfläche (27) der Kunststoffumreifungsbänder (2) durch die Summe der Basisflächen (30) der Vertiefungen (28) gebildet wird.

3. Verfahren nach Anspruch 1 oder 2, **dadurch gekennzeichnet, dass** der Prägevorgang bei einer Temperatur, ausgewählt aus einem Bereich zwischen 40 °C und 190 °C unterhalb der Schmelztemperatur des Kunststoffmaterials (3) durchgeführt wird.

4. Verfahren nach einem der vorhergehenden Ansprüche, **dadurch gekennzeichnet, dass** der verstreckte Strang (15) zwischen wenigstens zwei einander gegenüberliegenden, gegensinnig rotierenden Prägewalzen (24) hindurchgeführt wird, und dass mittels der beiden Prägewalzen (24) beide Oberflächen (22) des verstreckten Stranges (15) jeweils mit einer Prägung versehen werden.

5. Verfahren nach Anspruch 4, **dadurch gekennzeichnet, dass** Prägewalzen (24) eingesetzt werden, welche jeweils verglichen miteinander Fortsätze (26) mit unterschiedlich ausgeformten Plateauflächen (29) eingesetzt werden, und dass mittels der beiden Prägewalzen (24) die Oberflächen (22) des verstreckten Stranges (15) mit Vertiefungen (28) mit jeweils unterschiedlich ausgeformten Basisflächen (30) versehen werden.

## Claims

1. A method for producing plastic straps (2), comprising
providing a semi-crystalline thermoplastic plastic material (3),
melting the plastic material (3),
extruding the melted plastic material into at least one plastic strand (7) by means of an extrusion apparatus (5),
cooling the extruded plastic strand (7),
monoaxially or predominantly monoaxially stretching the plastic strand (7) into an stretched strand (15) by means of at least one stretching device (14), said stretched strand (15) comprising two surfaces (22) spaced from one another by a thickness (21) of the stretched strand (15),
wherein at least one surface (22) of the stretched strand (15) is provided with an embossing by means of an embossing device (23) comprising at least one embossing roller (24),
said embossing roller (24) comprising on its roller surface (25) projections (26) for generating recesses (28) on the at least one surface (22) of the stretched strand,
wherein
as the at least one embossing roller (24), an embossing roller (24) is used, the projections (26) of which comprise flat or predominantly flat plateau surfaces (29) for generating flat or predominantly flat base surfaces (30) of the recesses (28) on the at least one surface (22) of the stretched strand (15),
**characterized in that** the plateau surfaces (29) of the projections (26) are dimensioned such and that the projections (26) are arranged on the roller surface (25) spaced from one another such, that between 44 % and 55 % of a respective entire parallel projection, viewed from a vertical top view, of the respective at least one embossed strap surface (27) of the plastic straps (2) is formed by the total amount of the base surfaces (30) of the recesses (28),
and that the at least one embossing roller (24) is positioned such in relation to the surface (22) of the stretched strand (15) facing the embossing roller (24) that, in the course of embossing, the plateau surfaces (29) of the projections (26) enter into the stretched strand (15) with a penetration depth (34) of between 2% and 48% relative to the thickness (21) of the stretched strand (15) before embossing,
and that as the at least one embossing roller (24), an embossing roller (24) with projections (26) is used, the plateau surfaces (29) of which are bounded by closed, oval curves.

2. The method according to claim 1, **characterized in that** as the at least one embossing roller (24), an embossing roller (24) is used, the plateau surfaces (29) of the projections (26) of which are dimensioned such, and the projections (26) of which are arranged on the roller surface (25) spaced from one another such, that between 45 % and 52 % of the respective entire parallel projection, viewed from the vertical top view, of the respective at least one embossed strap surface (27) of the plastic straps (2) is formed by the total amount of the base surfaces (30) of the recesses (28).

3. The method according to claim 1 or 2, **characterized in that** the embossing process is carried out at a temperature chosen from a range between 40°C and 190°C below the melting temperature of the plastic material (3).

4. The method according to one of the preceding claims, **characterized in that** the stretched strand (15) is fed through between at least two counter-rotating embossing rollers (24) opposing each other and **in that** both surfaces (22) of the stretched strand (15) are respectively provided with an embossing by means of the two embossing rollers (24).

5. The method according to claim 4, **characterized in that** embossing rollers (24) are used, which are respectively used with projections (26) with differently formed plateau surfaces (29) as compared to one another, and **in that** by means of the two embossing rollers (24), the surfaces (22) of the stretched strand (15) are provided with recesses (28) respectively having differently formed base surfaces (30).

## Revendications

1. Procédé de fabrication de bandes de cerclage en matière plastique (2), comprenant
la mise à disposition d'une matière plastique thermoplastique partiellement cristalline,
la fusion de la matière plastique (3),
l'extrusion de la matière plastique fondue au moyen d'un dispositif d'extrusion (5) afin d'obtenir au moins un cordon de matière plastique (7),
le refroidissement du cordon de matière plastique (7) extrudé,
l'étirement monoaxial ou majoritairement monoaxial du cordon de matière plastique (7) en un cordon étiré (15) au moyen d'au moins un dispositif d'étirement (14), ce cordon étiré (15) comprenant deux surfaces (22) écartées l'une de l'autre par une épaisseur (21) du cordon étiré (15),
dans lequel au moins une surface (22) du cordon étiré (15) est munie d'un estampage au moyen d'un dispositif d'estampage (23), comprenant au moins un cylindre d'estampage (24), ce cylindre d'estampage (24) comprenant, sur sa surface de cylindre (25), des saillies (26) pour la production de cavités (28) sur la au moins une surface (22) du cordon étiré,
dans lequel le au moins un cylindre d'estampage (24) utilisé est un cylindre d'estampage (24) dont les saillies (26) comprennent des surfaces de palier planes ou majoritairement planes (29) pour la production de surfaces de bases planes ou majoritairement planes (30) des cavités (28) sur la au moins une surface (22) du cordon étiré (15),
**caractérisé en ce que**
les surfaces de palier (29) des saillies (26) sont dimensionnées et les saillies (26) sont éloignées les unes des autres sur la surface du cylindre (25) de façon à ce qu'entre 44 % et 55 % d'une projection parallèle totale, en vue de dessus verticale, de la au moins une surface de bande estampée (27) des bandes de cerclage en matière plastique (2) soient constitués de la somme des surfaces de base (30) des cavités (28),
et **en ce que** le au moins un cylindre d'estampage (24) est positionné, par rapport à la surface (22), orientée vers le cylindre d'estampage (24), du cordon étiré (15), de façon à ce que les surfaces de palier (29) des saillies (26) pénètrent dans le cordon étiré (15), au cours de l'estampage, à une profondeur de pénétration (34) entre 2 % et 48 % de l'épaisseur (21) du cordon étiré (15) avant l'estampage.

2. Procédé selon la revendication 1, **caractérisé en ce que** le au moins un cylindre d'estampage (24) utilisé est un cylindre d'estampage (24) dont les surfaces de palier (26) des saillies (26) sont dimensionnées et dont les saillies (26) sont éloignées les unes des autres sur la surface du cylindre (25) de façon à ce qu'entre 45 % et 52 % de la projection parallèle totale, en vue de dessus verticale, de l'au moins une surface de bande estampée (27) des bandes de cerclage en matière plastique (2) soient constitués de la somme des surfaces de base (30) des cavités (28).

3. Procédé selon la revendication 1 ou 2, **caractérisé en ce que** le processus d'estampage est exécuté à une température sélectionnée dans un intervalle entre 40 °C et 190 °C en dessous de la température de fusion de la matière plastique (3).

4. Procédé selon l'une des revendications précédentes, **caractérisé en ce que** le cordon étiré (15) est guidé entre au moins deux cylindres d'estampage (24) disposés l'un en face de l'autre et tournant dans des sens opposés et **en ce qu'**au moyen des deux cylindres d'estampage (24), les deux surfaces (22) du cordon étiré (15) sont munies chacune d'un estampage.

5. Procédé selon la revendication 4, **caractérisé en ce que** des cylindres d'estampage (24) sont utilisés, qui comprennent des saillies (26) mutuellement comparables avec des surfaces de palier (29) de formes différentes les unes des autres et **en ce qu'**au moyen des deux cylindres d'estampage (24), les surfaces (22) du cordon étiré (15) sont munies de cavités (28) avec des surfaces de base (30) de formes différentes.
